# EUROPÄISCHE PATENTSCHRIFT

(11) **EP 1 050 497 B1**
(45) Veröffentlichungstag und Bekanntmachung des Hinweises auf die Patenterteilung: **06.10.2004**
(21) Anmeldenummer: 00109293.1
(22) Anmeldetag: 29.04.2000
(51) Int. Cl.: B65G 65/23, B65D 3/00

(54) **Vorrichtung zum Entleeren von Transport- und Lagerbehältern für Flüssigkeiten**
Device for emptying a transport and storage container for liquids
Dispositif de déchargement d'un récipient de transport et de stockage de liquides

(30) Priorität: 05.05.1999 DE 29907967 U
(43) Veröffentlichungstag der Anmeldung: 08.11.2000
(73) Patentinhaber: PROTECHNA S.A., 1701 Fribourg (CH)
(72) Erfinder: Schütz, Udo, 56242 Selters (DE)
(74) Vertreter: Pürckhauer, Rolf, Dipl.-Ing.

(56) Entgegenhaltungen:
- EP-A- 0 857 666
- DE-A- 3 207 437
- DE-U- 29 620 791
- DE-U- 29 907 967
- NL-A- 8 802 239
- US-A- 5 490 603

## Beschreibung

Die Erfindung betrifft eine Vorrichtung zum Entleeren von Transport- und Lagerbehältern für Flüssigkeiten, mit einem Grundgestell, einem auf diesem drehbar angebrachten Schwenkgestell zur Aufnahme eines Transportbehälters für Flüssigkeiten und einem Schwenkantrieb zum Hochschwenken des Schwenkgestells aus einer unteren Ausgangsposition zum Einstellen des Transportbehälters in eine obere Endposition, in der der Transportbehälter eine Entleerposition einnimmt, wobei der Transportbehälter einen Innenbehälter aus Kunststoff mit vier Seitenwänden, einem unteren Boden und einem oberen Boden mit einer Einfüllöffnung und einer Entleeröffnung, die verschließbar sind, einen als Gitter- oder Blechmantel ausgebildeten Außenmantel und ein palettenartiges Untergestell aufweist, wobei das Grundgestell einen Bodenrahmen, zwei auf diesem befestigte vordere Stützen und zwei Seitenwände aufweist, das Schwenkgestell, das durch einen Bodenrahmen, eine Vorderwand und zwei Seitenwände gebildet ist, an den oberen Abschnitten von zwei Stützen des Grundgestells schwenkbar gelagert ist, und wobei der Antrieb des Schwenkgestells aus zwei an eine Hydraulikpumpe angeschlossenen Zylinder-Kolbeneinheiten besteht, die jeweils am Bodenrahmen des Grundgestells und einer Seitenwand des Schwenkgestells gelenkig befestigt sind.

Eine aus der DE 32 07 437 A1 bekannte Vorrichtung der gattungsgemäßen Art zum Entleeren von mit pulverförmigen Rohstoffen gefüllten Fässern ist mit einem Abdeckhalter ausgerüstet, der als ein mit einem verschließbaren Auslauf versehener Deckel zum Halten und Abdecken eines zu entleerenden Fasses in der Überkopflage ausgebildet ist.

Eine aus NL-A-8802239 bekannte Vorrichtung dient zum Anheben einer Last, die verstaut werden soll. Sie ist zum Kippen von Flüssigkeitsbehältern zum Zwecke der Entleerung derselben nicht geeignet.

Bei Entnahmearmaturen wie Klappen- und Kugelhähnen, die unter Flüssigkeitsdruck stehen, besteht mit fortschreitender Zeit die Gefahr des Undichtwerdens. Bei einer wiederholten Entnahme von Flüssigkeiten aus dem Behälter ist nicht zu verhindern, daß Restflüssigkeit von der Armatur unerwünscht auf den Boden abtropft, falls kein Auffangbehälter aufgestellt wird. Der Transport und die Lagerung von Flüssigkeiten mit einem hohen Reinheitsgrad für eine industrielle Verwertung sowie von flüssigen Lebensmittels wie Säften und Sirup in den bekannten, mit einer Entnahmearmatur im Bodenbereich ausgestatteten Behältern ist wegen der Verunreinigungsgefahr durch für die Armatur gegebenenfalls erforderliche Schmiermittel wie Silikone und in der Armatur verbleibende Rückstände, die bei wiederholter Entnahme von Teilmengen aus dem Flüssigkeitsbehälter in die Flüssigkeit gelangen können und diese verunreinigen, problematisch. Schließlich ist die Restentleerung des Behälters über die im Bodenbereich der Behälterstirnwand angebrachte Entnahmearmatur nicht optimal.

Zur Vermeidung der vorerwähnten Nachteile von Flüssigkeitsbehältern mit einer Entnahmearmatur im Bodenbereich sieht ein älterer Vorschlag vor, die Entleeröffnung neben der Einfüllöffnung im oberen Boden des Behälters anzuordnen.

Der Erfindung liegt die Aufgabe zugrunde, eine konstruktiv einfache und preisgünstige Entleervorrichtung zu entwickeln, die eine optimale Entleerung von Transport- und Lagerbehältern für Flüssigkeiten mit einer im oberen Behälterboden angeordneten Entleeröffnung ermöglicht, insbesondere auch dann, wenn sich in der Flüssigkeit vorhandene Pigmente oder sonstige Feststoffe am Boden des Behälters absetzen können.

Diese Aufgabe ist erfindungsgemäß gelöst durch eine Entleervorrichtung mit den Merkmalen des Patentanspruchs 1.

Die Unteransprüche beinhalten vorteilhafte und zweckmäßige Weiterbildungen der Erfindung.

Die Erfindung ist nachstehend anhand von Zeichnungsfiguren erläutert, die folgendes darstellen:
- Fig. 1: eine perspektivische Darstellung einer Entleervorrichtung mit einem in die Entleerposition hochgeschwenkten Transport- und Lagerbehälter für Flüssigkeiten,
- Fig. 2: eine Seitenansicht der Entleervorrichtung mit einem eingestellten, zu entleerenden Behälter,
- Fig. 3: eine Seitenansicht der Entleervorrichtung mit einem in die Entleerposition hochgeschwenkten Behälter,
- Fig. 4: eine Vorderansicht der Entleervorrichtung mit einem eingestellten, zu entleerenden Behälter,
- Fig. 5: eine Vorderansicht der Entleervorrichtung mit einem in die Entleerposition hochgeschwenkten Behälter,
- Fig. 6: eine perspektivische Darstellung einer mit einem Schutzgitter eingezäunten Entleervorrichtung und
- Fig. 7: eine Draufsicht der Entleervorrichtung mit Schutzgitter.

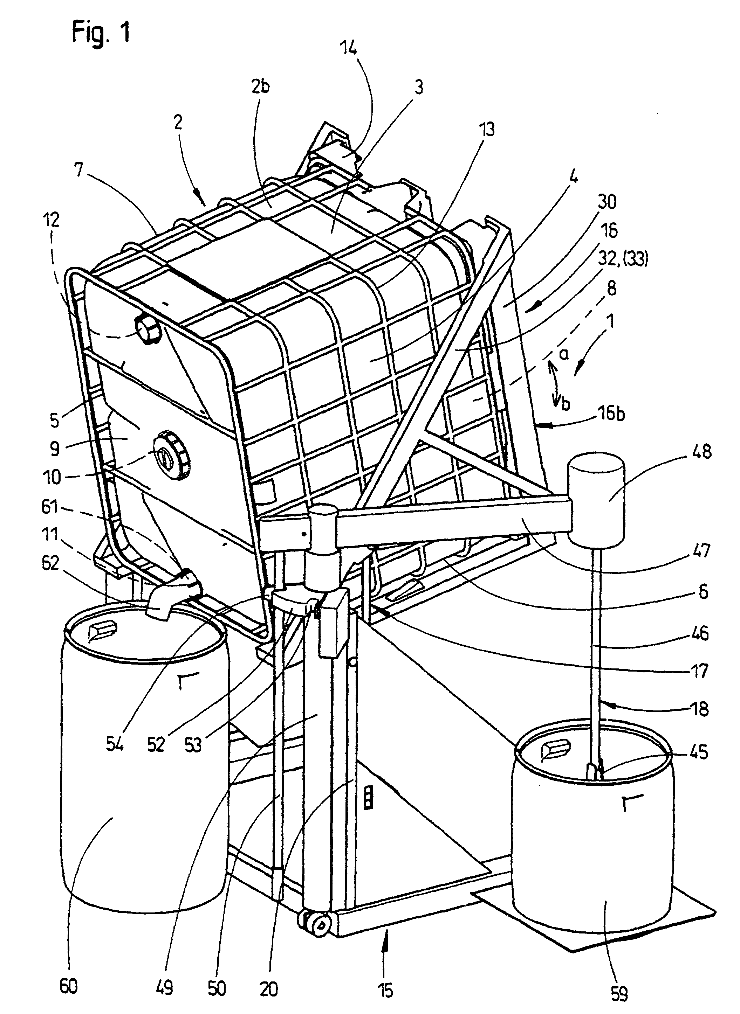

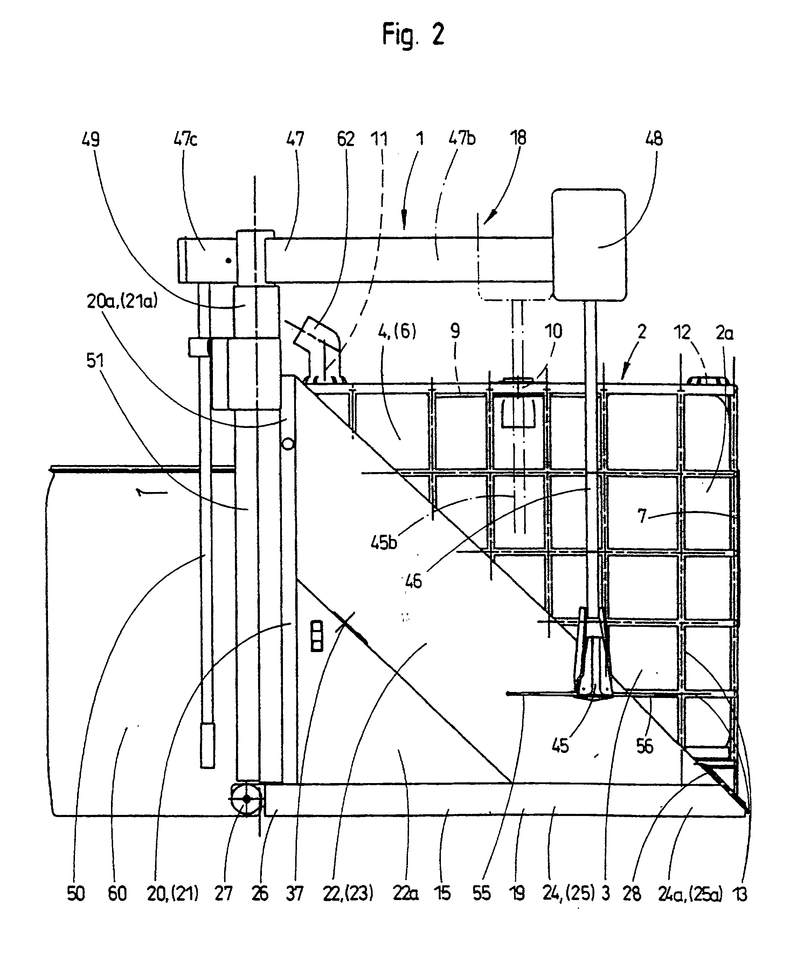

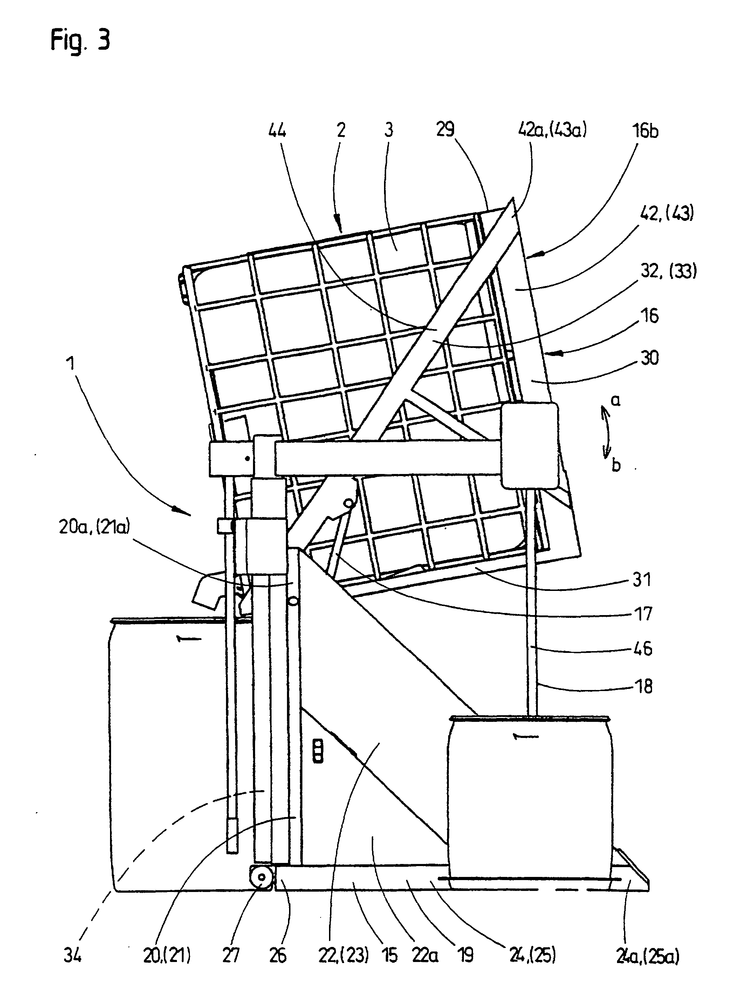

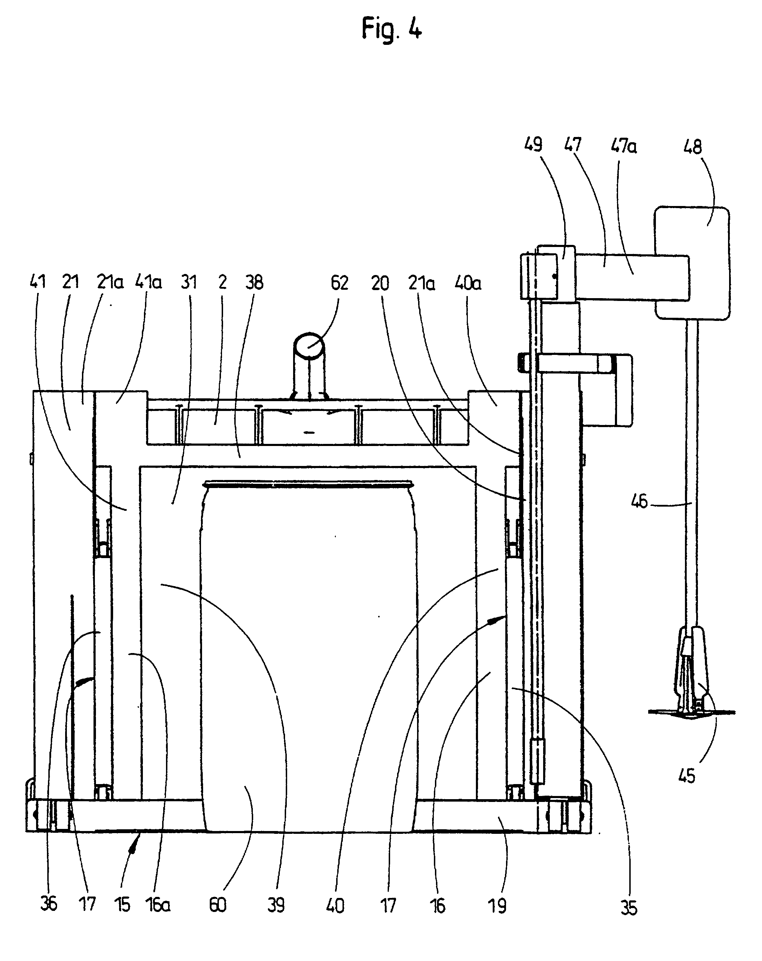

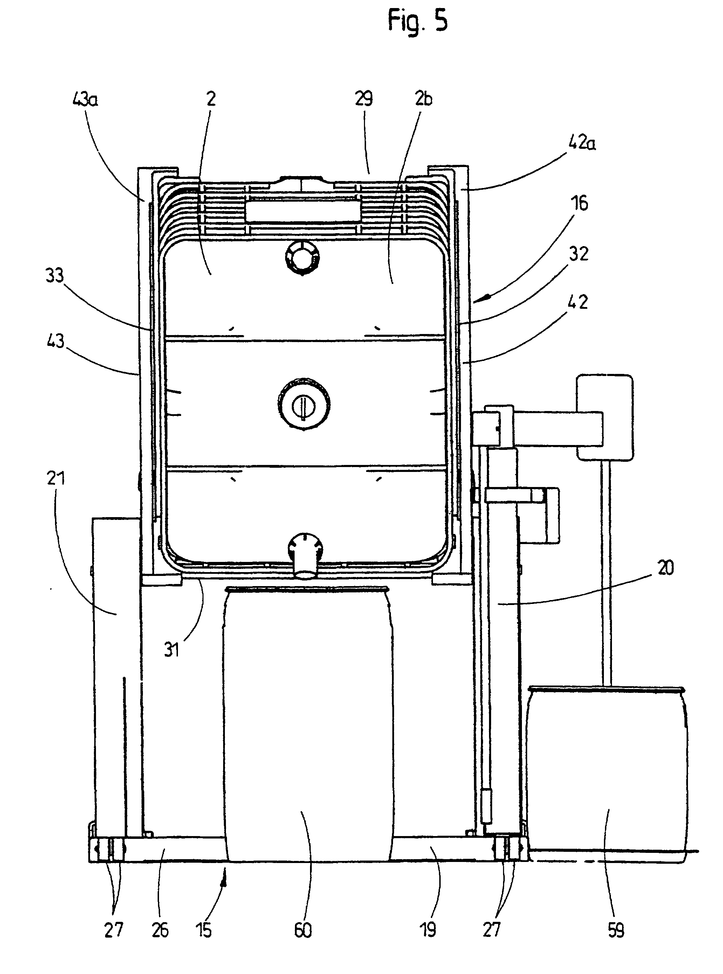

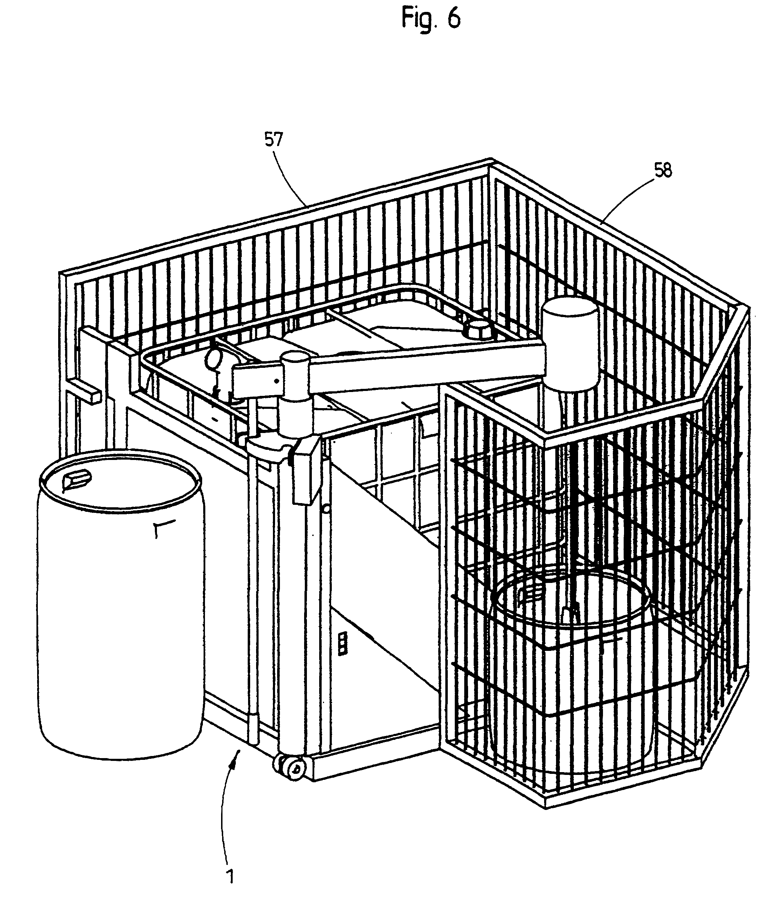

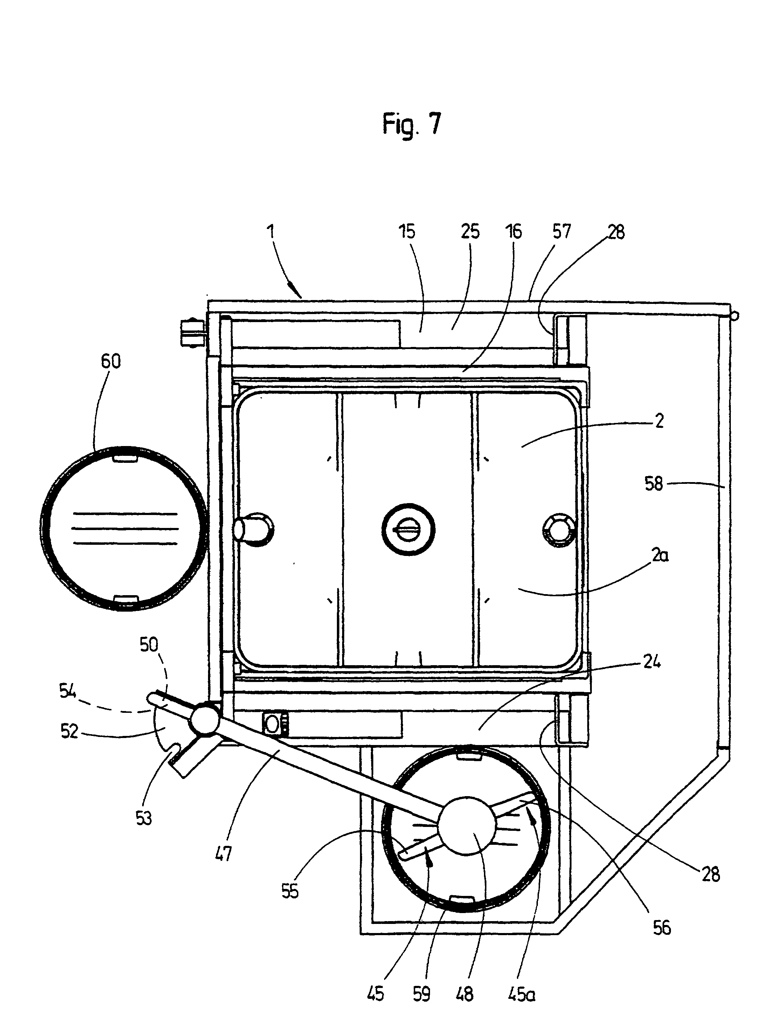

Die in den Fign. 1 - 7 dargestellte Entleervorrichtung 1 dient zum Entleeren von für Flüssigkeiten bestimmten Transport- und Lagerbehältern 2 mit einem Innenbehälter 3 aus Kunststoff, der aus vier Seitenwänden 4 - 7, einem unteren Boden 8 und einem oberen Boden 9 mit einer Einfüllöffnung 10, einer Entleeröffnung 11 und einer Be- und Entlüftungsöffnung 12 besteht, die verschließbar sind, einem als Gitter- oder Blechmantel ausgebildeten Außenmantel 13 und einem palettenartigen Untergestell 14.

Hauptbauteile der Entleervorrichtung 1 sind ein Grundgestell 15, ein auf diesem drehbar angebrachtes Schwenkgestell 16 zur Aufnahme eines Transportbehälters 2 für Flüssigkeiten, ein Schwenkantrieb 17 zum Hochschwenken des Schwenkgestells 16 aus einer unteren Ausgangsposition 16a mit der Einstellposition 2a des Transportbehälters 2 in eine obere Endposition 16b, in der der Transportbehälter 2 eine Entleerposition 2b einnimmt, sowie ein an das Grundgestell 15 angebautes Rührwerk 18.

Das Grundgestell 15 der Entleervorrichtung 1 besteht aus einem Bodenrahmen 19, zwei auf diesem befestigten vorderen Stützen 20, 21 und zwei als abgeschrägte Seitenwangen ausgebildeten Seitenwänden 22, 23. Die beiden Seitenrahmenteile 24, 25 des Bodenrahmens 19 des Grundgestells 15 sind als Hohlprofile ausgebildet, die Transportschuhe für die Greifarme eines Gabelstaplers bilden.

Am vorderen Rahmenteil 26 des Bodenrahmens 19 des Grundgestells 15 sind Laufräder 27 angebracht, und an den rückwärtigen Enden 24a, 25a der beiden Seitenrahmenteile 24, 25 des Bodenrahmens 19 sind Handgriffe 28 zur Handhabung der Entleervorrichtung 1 als Schubkarre befestigt.

Das auf der Rückseite 29 offene Schwenkgestell 16 der Entleervorrichtung 1, das durch einen Bodenrahmen 30, eine Vorderwand 31 und zwei Seitenwände 32, 33 gebildet ist, ist an den oberen Abschnitten 20a, 21a der beiden Stützen 20, 21 des Grundgestells 15 schwenkbar gelagert.

Der Schwenkantrieb 17 des Schwenkgestells 16 besteht aus zwei an eine Hydraulikpumpe 34 angeschlossenen Zylinder-Kolbeneinheiten 35, 36, die jeweils an einem Seitenrahmenteil 24, 25 des Bodenrahmens 19 des Grundgestells 15 und einer Seitenwand 32, 33 des Schwenkgestells 16 gelenkig befestigt sind.

Der Bedienungshebel 37 für den Schwenkantrieb 17 des Schwenkgestells 16 ist in einem vorgezogenen Wandabschnitt 22a einer Seitenwand 22 des Grundgestells 15 versenkt eingebaut.

Die einen Transportbehälter 2 in der Entleerposition 2b abstützende, geschlossene Vorderwand 31 des Schwenkgestells 16 besteht aus einem Rahmen 38 und einer von diesem gehaltenen Wandplatte 39. Die offenen Seitenwände 32, 33 des Schwenkgestells 16 sind jeweils durch einen vom oberen Abschnitt 40a, 41a eines Seitenrahmenteils 40, 41 der Vorderwand 31 schräg nach unten zum rückwärtigen Ende 42a, 43a eines Seitenrahmenteils 42, 43 des Bodenrahmens 30 des Schwenkgestells 16 verlaufenden Holm 44 gebildet.

Das mit der Entleervorrichtung 1 kombinierte Rührwerk 18 weist einen Klapppropeller 45 auf, der an einer Tauchachse 46 aufgehängt ist, die von einem an einem Schwenkarm 47 angebrachten Motor 48 angetrieben wird. Der Schwenkarm 47 ist an einer Drehstütze 49 befestigt, die an einer 20 der beiden vorderen Stützen 20, 21 des Grundgestells 15 angebracht ist. Die Drehstütze 49 ist zum Anheben und Absenken des Schwenkarms 47 mit dem Klapppropeller 45 motorisch oder von Hand höhenverstellbar. Der Klapppropeller 45 ist mittels des an der höhenverstellbaren Drehstütze 49 angebrachten Schwenkarms 47 manuell aus einer Ausgangsposition 45a außerhalb des Grundgestells 15 über einen in dem Schwenkgestell 16 der Entleervorrichtung 1 stehenden Transport- und Lagerbehälter 2 für Flüssigkeiten schwenkbar und durch die Einfüllöffnung 10 des Transportbehälters 2 in die Betriebsposition 45b in den Behälter 2 absenkbar, um die in diesem befindliche Flüssigkeit vor dem Entleeren des Behälters umzurühren, und umgekehrt aus der Betriebsposition 45b in die Ausgangsposition 45a zurückschwenkbar.

An dem kurzen Ende 47c des Schwenkarms 47 des Rührwerks 18 ist eine Griffstange 50 zum manuellen Verschwenken des Rührwerks angelenkt, die in der Ausgangsposition 47a, 45a und der Betriebsposition 47b, 45b des Schwenkarms 47 und des an diesem aufgehängten Klapppropellers 45 in entsprechende Rastöffnungen 53, 54 eines an dem feststehenden Außenmantel 51 der Drehstütze 49 des Rührwerks 18 angebrachten Rastsegments 52 einrastbar ist.

Die Griffstange 50 ist über nicht dargestellte Zugfedern mit dem Klapppropeller 45 des Rührwerks 18 zum Auf- und Zuklappen der Propellerflügel 55, 56 verbunden.

Aus Sicherheitsgründen kann die Entleervorrichtung 1 mit einem Schutzgitter 57 umzäunt werden, das auf der Rückseite der Entleervorrichtung 1 eine Gittertüre 58 aufweist, die zum Einstellen eines Transportbehälters 2 in das Schwenkgestell 16 der Entleervorrichtung geöffnet und für den Entleervorgang geschlossen wird. Die Gittertüre 58 des Schutzgitters 57 ist in einen Steuerkreis des Schwenkantriebs 17 des Schwenkgestells 16 für die Transportbehälter 2 als Stellglied integriert, derart, daß ein Einschalten des Schwenkantriebs 17 nur bei geschlossener Gittertüre 58 möglich ist.

In der Ausgangsposition 45a ist der Klapppropeller 45 des Rührwerks 18 üblicherweise im einen Behälter 59 mit Reinigungsflüssigkeit eingetaucht. Zum Umrühren einer Flüssigkeit in einem mit einem Hubstapler in das Schwenkgestell 16 der Entleervorrichtung 1 eingestellten Transportbehälter 2 vor dem Entleeren desselben wird der an dem Schwenkarm 47 hängende Klapppropeller 45 mit der höhenverstellbaren Drehstütze 49 aus dem Behälter 59 herausgehoben, mit dem Schwenkarm 47 über den Transportbehälter 2 geschwenkt, durch die Einfüllöffnung 10 desselben in die Betriebsposition 45b in die umzurührende Flüssigkeit eingetaucht und nach dem Rührvorgang wieder in die Ausgangsposition 45a zurückgeschwenkt.

Zum Abfüllen der in einem Transportbehälter 2 mit einem Inhalt von beispielsweise 1000 Litern befindlichen Flüssigkeit in Fässer 60 mit einem Fassungsvermögen von beispielsweise 80 Litern wird der Transportbehälter 2 anfänglich aus der Einstellposition 2a über einen Schwenkwinkel von ungefähr 100° in Pfeilrichtung a in die Entleerposition 2b hochgeschwenkt, in der die Flüssigkeit durch eine auf den Gewindekragen 61 der Entleeröffnung 11 des Behälters 2 aufgeschraubte Auslauftülle 62 aus dem Transportbehälter 2 in das bereitgestellte Faß 60 läuft. Sobald das Faß 60 abgefüllt ist, wird der Transportbehälter 2 aus der Entleerposition 2b in Pfeilrichtung b so weit nach unten geschwenkt, daß keine Flüssigkeit mehr auslaufen kann. Nach dem Abtransport des gefüllten Fasses und der Bereitstellung eines neuen Fasses wird dieses in der vorbeschriebenen Weise abgefüllt.

Bei Verwendung einer auf den Gewindekragen 61 der Entleeröffnung 11 eines Transportbehälters 2 aufzuschraubenden Entnahmearmatur wird diese nach dem Abfüllen eines Fasses 60 geschlossen und zum Abfüllen des nächsten Fasses wieder geöffnet, so daß der Transportbehälter 2 beim Abfüllen mehrerer Fässer in der hochgeschwenkten Entleerposition 2a verbleiben kann.

## Patentansprüche

1. Vorrichtung zum Entleeren von Transport- und Lagerbehältern für Flüssigkeiten, mit einem Grundgestell, einem auf diesem drehbar angebrachten Schwenkgestell zur Aufnahme eines Transportbehälters für Flüssigkeiten und einem Schwenkantrieb zum Hochschwenken des Schwenkgestells aus einer unteren Ausgangsposition zum Einstellen des Transportbehälters in eine obere Endposition, in der der Transportbehälter eine Entleerposition einnimmt, wobei der Transportbehälter einen Innenbehälter aus Kunststoff mit vier Seitenwänden, einem unteren Boden und einem oberen Boden mit einer Einfüllöffnung und einer Entleeröffnung, die verschließbar sind, einen als Gitter- oder Blechmantel ausgebildeten Außenmantel und ein palettenartiges Untergestell aufweist, wobei das Grundgestell einen Bodenrahmen, zwei auf diesem befestigte vordere Stützen und zwei Seitenwände aufweist, das Schwenkgestell, das durch einen Bodenrahmen, eine Vorderwand und zwei Seitenwände gebildet ist, an den oberen Abschnitten von zwei Stützen des Grundgestells schwenkbar gelagert ist, und wobei der Antrieb des Schwenkgestells aus zwei an eine Hydraulikpumpe angeschlossenen Zylinder-Kolbeneinheiten besteht, die jeweils am Bodenrahmen des Grundgestells und einer Seitenwand des Schwenkgestells gelenkig befestigt sind, **dadurch gekennzeichnet, daß** an das Grundgestell (15) ein Rührwerk (18) angebaut ist, das einen motorisch angetriebenen Klapppropeller (45) aufweist, der an einer Tauchachse (46) aufgehängt ist, die von einem an einem Schwenkarm (47) angebrachten Motor (48) angetrieben wird, wobei der Schwenkarm (47) an einer Drehstütze (49) befestigt ist, die an einer (20) der beiden vorderen Stützen (20, 21) des Grundgestells (15) angebracht ist, daß die Drehstütze (49) zum Anheben und Absenken des Schwenkarms (47) mit dem Klapppropeller (45) motorisch oder von Hand höhenverstellbar ist und der Klapppropeller (45) mittels des an der höhenverstellbaren Drehstütze (49) angebrachten Schwenkarms (47) manuell oder motorisch aus einer Ausgangsposition (45a) außerhalb des Grundgestells (15) über einen in dem Schwenkgestell (16) der Entleervorrichtung (1) stehenden Transportbehälter (2) für Flüssigkeiten schwenkbar und durch die Einfüllöffnung (10) des Transportbehälters (2) in die Betriebsposition (45b) in den Behälter (2) absenkbar ist und umgekehrt aus der Betriebsposition (45b) in die Ausgangsposition (45a) zurückschwenkbar ist.

2. Vorrichtung nach Anspruch 1, **gekennzeichnet durch** eine am kurzen Ende (47c) des Schwenkarms (47) des Rührwerks (18) angelenkte Griffstange (50) zum manuellen Verschwenken des Rührwerks (18), wobei die Griffstange (50) in der Ausgangsposition (47a, 45a) und der Betriebsposition (47b, 45b) des Schwenkarms (47) und des an diesem aufgehängten Klapppropellers (45) in entsprechende Rastöffnungen (53, 54) eines an dem feststehenden Außenmantel (51) der Drehstütze (49) des Rührwerks (18) angebrachten Rastsegments (52) einrastbar ist.

3. Vorrichtung nach Anspruch 2, **dadurch gekennzeichnet, daß** die Griffstange (50) über Zugfedern mit dem Klapppropeller (45) des Rührwerks (18) zum Auf- und Zuklappen der Propellerflügel (55, 56) verbunden ist.

4. Vorrichtung nach einem der Ansprüche 1 bis 3, **dadurch gekennzeichnet, daß** die beiden Seitenrahmenteile (24, 25) des Bodenrahmens (19) des Grundgestells (15) als Hohlprofile ausgebildet sind, die Transportschuhe für die Greifarme eines Gabelstaplers bilden.

5. Vorrichtung nach einem der Ansprüche 1 bis 4, **gekennzeichnet durch** am vorderen Rahmenteil (26) des Bodenrahmens (19) des Grundgestells (15) angebrachte Laufräder (27) sowie an den rückwärtigen Enden (24a, 25a) der beiden Seitenrahmenteile (24, 25) des Bodenrahmens (19) befestigte Handgriffe (28) zur Handhabung der Entleervorrichtung (1) als Schubkarre.

6. Vorrichtung nach einem der Ansprüche 1 bis 5, **dadurch gekennzeichnet, daß** die Seitenwände (22, 23) des Grundgestells (15) als abgeschrägte Seitenwangen ausgebildet sind.

7. Vorrichtung nach einem der Ansprüche 1 bis 6, **gekennzeichnet durch** einen versenkten Einbau des Bedienungshebels (37) für den Antrieb (17) des Schwenkgestells (16) in einem vorgezogenen Wandabschnitt (22a) einer Seitenwand (22) des Grundgestells (15).

8. Vorrichtung nach einem der Ansprüche 1 bis 7, **dadurch gekennzeichnet, daß** die den Transportbehälter (2) in der Entleerposition (2b) abstützende Vorderwand (31) des Schwenkgestells (16) geschlossen ist und die Seitenwände (32, 33) des Schwenkgestells (16) offen ausgebildet sind.

9. Vorrichtung nach Anspruch 8, **dadurch gekennzeichnet, daß** die Vorderwand (31) des Schwenkgestells (16) aus einem Rahmen (38) und einer von diesem gehaltenen Wandplatte (39) besteht und daß die Seitenwände (32, 33) des Schwenkgestells (16) jeweils durch einen vom oberen Abschnitt (40a, 41a) eines Seitenrahmenteils (40, 41) der Vorderwand (31) schräg nach unten zum rückwärtigen Ende (42a, 43a) eines Seitenrahmenteils (42, 43) des Bodenrahmens (30) des Schwenkgestells (16) verlaufenden Holm (44) gebildet sind.

10. Vorrichtung nach einem der Ansprüche 1 bis 9, **gekennzeichnet durch** ein Schutzgitter (57) als Umzäunung für die Entleervorrichtung (1).

11. Vorrichtung nach Anspruch 10, **dadurch gekennzeichnet, daß** das Schutzgitter (57) auf der Rückseite der Entleervorrichtung (1) eine Gittertüre (58) aufweist.

12. Vorrichtung nach Anspruch 10 und 11, **dadurch gekennzeichnet, daß** die Gittertüre (58) des Schutzgitters (57) in einen Steuerkreis des Schwenkantriebs (17) des Schwenkgestells (16) für die Transportbehälter (2) als Stellglied integriert ist, derart, daß ein Einschalten des Schwenkantriebs (17) nur bei geschlossener Gittertüre (58) möglich ist.

## Claims

1. Device for emptying transport and storage containers for liquids, with a base frame, a swivel frame rotatably attached thereto to receive a transport container for liquids and a swivel drive to swivel the swivel frame up from a lower starting position to adjust the transport container into an upper end position, in which the transport container assumes an emptying position, wherein the transport container has an inside container made of plastic with four side walls, a lower floor and an upper floor with a filling opening and an emptying opening, which are closable, an outer shell configured as a grating or sheet metal shell and a pallet-type bottom frame, wherein the base frame has a floor frame, two front supports fastened thereon and two side walls, the swivel frame which is formed by a floor frame, a front wall and two side walls, is disposed to swivel on the upper sections of two supports of the base frame, and wherein the drive of the swivel frame comprises two cylinder-piston units connected to a hydraulic pump, which are fastened to respectively pivot on the floor frame of the base frame and a side wall of the swivel frame, **characterised in that** an agitator (18) is attached to the base frame (15), said agitator having a motor-driven folding propeller (45), which is suspended on a dipping axis means (46), which is driven by a motor attached to the swivel arm (47), wherein the swivel arm (47) is fastened to a rotary support (49), which is attached to one (20) of the two front supports (20, 21) of the base frame (15), that the rotary support (49) is adjustable in height by motor or by hand for raising and lowering the swivel arm (47) with the folding propeller (45), and the folding propeller (45) may be swivelled, manually or by motor, by means.of the swivel arm (47) attached to the height-adjustable rotary support (49) from a starting position (45a) outside the base frame (15) over a transport container (2) for liquids standing in the swivel frame (16) of the emptying device (1) and may be lowered into the container (2) through the filling opening (10) of the transport container (2) into the operating position (45b), and in reverse may be swivelled back from the operating position (45b) into the starting position (45a).

2. Device according to Claim 1, **characterised by** a gripping rod (50) articulated to the short end (47c) of the swivel arm (47) of the agitator (18) to swivel the agitator (18) manually, wherein the gripping rod (50) can be latched in the starting position (47a, 45a) and the operating position (47b, 45b) of the swivel arm (47) and the folding propeller (45) suspended thereon into corresponding latch openings (53, 54) of a latch segment (52) attached to the stationary outer shell (51) of the rotary support (49) of the agitator (18).

3. Device according to Claim 2, **characterised in that** the gripping rod (50) is connected via tension springs to the folding propeller (45) of the agitator (18) for folding the propeller blade (55, 56) out and in.

4. Device according to one of Claims 1 to 3, **characterised in that** the two side frame parts (24, 25) of the floor frame (19) of the base frame (15) are configured as hollow sections, which form transport runners for the gripping arms of a forklift truck.

5. Device according to one of Claims 1 to 4, **characterised by** running wheels (27) attached to the front frame part (26) of the floor frame (19) of the base frame (15) as well as handles (28) fastened to the rear ends (24a, 25a) of the two side frame parts (24, 25) of the floor frame (19) for manoeuvring the emptying device (1) like a wheelbarrow.

6. Device according to one of Claims 1 to 5, **characterised in that** the side walls (22, 23) of the base frame (15) are configured as sloping side cheeks.

7. Device according to one of Claims 1 to 6, **characterised by** a recessed installation of the operating lever (37) for drive (17) of the swivel frame (16) in a drawn-forward wall section (22a) of a side wall (22) of the base frame (15).

8. Device according to one of Claims 1 to 7, **characterised in that** the front wall (31) of the swivel frame (16) supporting the transport container (2) in the emptying position (2b) is closed and the side walls (32, 33) of the swivel frame (16) are configured open.

9. Device according to Claim 8, **characterised in that** the front wall (31) of the swivel frame (16) comprises a frame (38) and a wall panel (39) held by this, and that the side walls (32, 33) of the swivel frame (16) are respectively formed by a beam (44) running from the upper section (40a, 41a) of a side frame part (40, 41) of the front wall (31) obliquely downwards to the rear end (42a, 43a) of a side frame part (42, 43) of the floor frame (30) of the swivel frame (16).

10. Device according to one of Claims 1 to 9, **characterised by** a protective grating (57) as fencing enclosure for the emptying device (1).

11. Device according to Claim 10, **characterised in that** the protective grating (57) has a grating door (58) on the rear side of the emptying device (1).

12. Device according to Claim 10 and 11, **characterised in that** the grating door (58) of the protective grating (57) in integrated into a control circuit of the swivel drive (17) of the swivel frame (16) for the transport container (2) as final control element in such a manner that it is only possible to switch on the swivel drive (17) with the grating door (58) is closed.

## Revendications

1. Dispositif pour vider des récipients de transport et de stockage à liquides, comportant un bâti de base, un bâti pivotant monté sur celui-ci de façon à pouvoir tourner pour recevoir un récipient de transport à liquides et un entraînement pivotant pour faire basculer le bâti pivotant vers le haut depuis une position initiale inférieure pour mettre le récipient de transport jusque dans une position finale supérieure où le récipient de transport prend une position de vidange, dans lequel le récipient de transport se compose d'un récipient intérieur en matière plastique comportant quatre parois latérales, un fond inférieur et un fond supérieur comportant une ouverture de remplissage et une ouverture de vidange qu'on peut fermer, d'une enveloppe extérieure sous forme d'enveloppe en treillis ou en tôle et d'un bâti inférieur de type palette ; dans lequel le bâti de base se compose d'un cadre de fond, de deux supports avant qui y sont fixés et de deux parois latérales, le bâti pivotant qui est formé d'un cadre de fond, d'une paroi avant et de deux parois latérales étant monté de façon à pivoter sur les segments supérieurs de deux supports du bâti de base, et l'entraînement du bâti pivotant est constitué de deux unités cylindre /piston, raccordées à une pompe hydraulique, qui sont chacune fixées de façon articulée au cadre de fond du bâti de base et à une paroi latérale du bâti pivotant,
**caractérisé en ce que** sur le bâti de base (15) est monté un mécanisme agitateur (18) équipé d'une hélice pliante, entraînée par moteur et suspendue à un axe plongeur (46) qui est entraîné par un moteur (48) monté sur un bras pivotant (47), le bras pivotant (47) étant fixé à un support tournant (49) monté sur l'un (20) des deux supports (20, 21) avant du bâti de base (15), que le support tournant (49) destiné à lever et à abaisser le bras pivotant (47) équipé de l'hélice pliante (45) peut être réglé en hauteur par moteur ou à la main et l'hélice pliante (45) peut être basculée par moteur ou à la main à l'aide du bras pivotant (47) monté réglable en hauteur sur le support tournant (49) depuis une position initiale (45a) à l'extérieur du bâti de base (15) au-dessus d'un récipient de transport (2) à liquides placé dans le bâti pivotant (16) du dispositif de vidange (1) et être abaissée dans le récipient (2) en position de fonctionnement (45b) à travers l'ouverture de remplissage (10) du récipient de transport (2) et inversement être à nouveau basculée de la position de fonctionnement (45b) jusqu'en position initiale (45a).

2. Dispositif selon la revendication 1, **caractérisé par** une barre de saisie (50) articulée à l'extrémité (47c) courte du bras pivotant (47) du mécanisme agitateur (18) et destinée à basculer à la main le mécanisme agitateur (18), la barre de saisie (50) pouvant s'encliqueter dans des ouvertures d'encliquetage (53, 54) correspondantes d'un segment d'encliquetage (52) appliqué sur l'enveloppe extérieure (51) fixe du support tournant (49) du mécanisme agitateur (18), lorsque le bras pivotant (47) et l'hélice pliante (45) qui y est suspendue sont en position initiale (47a, 45a) et en position de fonctionnement (47b, 45b).

3. Dispositif selon la revendication 2, **caractérisé en ce que**, pour déplier et pour replier la pale d'hélice (55, 56), la barre de saisie (50) est reliée à l'hélice pliante (45) du mécanisme agitateur (18) par l'intermédiaire de ressorts de traction.

4. Dispositif selon l'une des revendications 1 à 3, **caractérisé en ce que** les deux parties de cadre latéral (24, 25) du cadre de fond (19) du bâti de base (15) prennent la forme de profilés creux qui forment le patin de transport destiné aux bras de saisie d'un chariot à fourche.

5. Dispositif selon l'une des revendications 1 à 4, **caractérisé par** des roues porteuses montées sur la partie de cadre (26) avant du cadre de fond (19) du bâti de base (15) ainsi que par des poignées (28) fixées aux extrémités (24a, 25a) arrière des deux parties de cadre latéral (24, 25) du cadre de fond (19) et destinées à manoeuvrer le dispositif de vidange (1) comme une brouette.

6. Dispositif selon l'une des revendications 1 à 5, **caractérisé en ce que** les parois latérales (22, 23) du bâti de base (15) sont conçues en tant que joues latérales biseautées.

7. Dispositif selon l'une des revendications 1 à 6, **caractérisé en ce que** le levier de manoeuvre (37) destiné à l'entraînement (17) du bâti pivotant (16) est monté en étant enfoncé dans un segment de paroi (22a) avancé d'une paroi latérale (22) du bâti de base (15).

8. Dispositif selon l'une des revendications 1 à 7, **caractérisé en ce que** la paroi avant (31 ) - du bâti pivotant (16) - qui soutient le récipient de transport (2) dans la position de vidange (2b) est fermée et les parois latérales (32, 33) du bâti pivotant (16) sont ouvertes.

9. Dispositif selon la revendication 8, **caractérisé en ce que** la paroi avant (31) du bâti pivotant (16) se compose d'un cadre (38) et d'une plaque de paroi (39) qu'il maintient et chacune des parois latérales (32, 33) du bâti pivotant (16) est formée d'une barre (44) qui s'étend depuis le segment supérieur (40a, 41 a) d'une partie de cadre latéral (40, 41) de la paroi avant (31) en étant incliné vers le bas jusqu'à l'extrémité arrière (42a, 43a) d'une partie de cadre latéral (42, 43) du cadre de fond (30) du bâti pivotant (16).

10. Dispositif selon l'une des revendications 1 à 9, **caractérisé par** un treillis de protection (57), qui sert à entourer le dispositif de vidange (1).

11. Dispositif selon la revendication 10, **caractérisé en ce que** le grillage de protection (57) présente une porte grillagée (58) sur le côté arrière du dispositif de vidange (1).

12. Dispositif selon les revendications 10 et 11, **caractérisé en ce que** la porte grillagée (58) du grillage de protection (57) est intégrée en tant qu'actionneur dans un circuit de commande de l'entraînement pivotant (17) du bâti pivotant (16) destiné aux récipients de transport (2) de telle sorte qu'il n'est possible de mettre en marche l'entraînement pivotant (17) que lorsque la porte grillagée (58) est fermée.
